(19) Europäisches Patentamt
European Patent Office
Office européen des brevets

(11) **EP 2 144 379 A1**

(12) **EUROPEAN PATENT APPLICATION**

(43) Date of publication:
**13.01.2010 Bulletin 2010/02**

(51) Int Cl.:
***H04B 7/005*** (2006.01)

(21) Application number: **08104661.7**

(22) Date of filing: **07.07.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (72) Inventors:<br>• **Chapman, Thomas Malcolm**<br>  **Bitterne, Southampton, SO18 4RY (GB)**<br>• **Dodgson, Dr. Terence E.**<br>  **Swanwick, Southampton, SO31 1BU (GB)** |
| (71) Applicant: **Nokia Siemens Networks OY**<br>**02610 Espoo (FI)** | (74) Representative: **Bruglachner, Thomas E.**<br>**Nokia Siemens Networks Oy**<br>**COO RTP IPR / Patent Administration**<br>**80240 Munich (DE)** |

(54) **Coordinating of network nodes**

(57) A coordinating apparatus (100) for controlling a base station (106) or a terminal (105) is provided, wherein the coordinating apparatus comprises a terminal type determining device (101) and a coordinating device (103).

The terminal type determining device (101) is adapted to determine the type of a terminal (105) and the coordinating device (103) is adapted to transmit a control signal to at least one of the base station (106) and the terminal (105).

The control signal comprises information allowing to control a transmit power used for a communication between the terminal (105) and the base station (106) during a predefined time period (302) in accordance with the determined terminal type.

Fig. 5

EP 2 144 379 A1

**Description**

Technical field of the invention

The present invention relates to telecommunication networks. In particular, the present invention relates to a coordinating apparatus, a base station, a terminal, a method for controlling the base station or the terminal, a program element for controlling the base station or the terminal, a method for operating the base station or the terminal, a program element for operating the base station or the terminal and a use of a method for soft handover for determining the type of a terminal.

Background of the invention

Applications like VoIP (Voice over the Internet Protocol) or online Gaming may require short latency times or short round trip delays. Generally such applications may be known as mission critical applications. A user suffering too much delay either in a fixed network or a wireless network may stop using such mission critical applications. In the end, delays may make such high performance services unattractive for users.

In particular in mobile networks additional delays may be introduced by physical phenomenon like fading. For the support of high speed applications or mission critical applications in UMTS (Universal Mobile Telecommunications System) networks the concept of HSPA (High Speed Packet Access) has been introduced.

HSPA comprises the two standards HSDPA (High-Speed Downlink Packet Access) and HSUPA (High-Speed Uplink Packet Access). HSUPA uses the physical uplink control channel E-DPCCH (Enhanced Dedicated Physical Control Channel) and the physical uplink data channel E-DPDCH (Enhanced Physical Data Channel).

A description of E-DPDCH and E-DPCCH is made in the technical specification of the 3GPP (3$^{rd}$ Generation Partnership Project) technical specification group radio access network, "physical channels and mapping of transport channels onto physical channels (FDD)", TS 25.211 (2008-03), Release 8.

The technical specification of the 3GPP technical specification group radio access network, "Radio Resource Control (RRC)", TS 25.331, (2007-12), Release 8, describes the Radio Resource Control.

Furthermore, a Soft Handover Method may be known from the book "WCDMA for UMTS"; Wiley; Toskala & Holma; 4th edition, September 2007.

A Radio Network Controller (RNC) is known from the technical specification of the 3GPP technical specification group radio access network, "UTRAN overall description", TS 25.401, (2007-09), Release 7.

So called interference mitigation has been studied as part of the development of the UTRA LTE standard. This is described in the technical specification of the 3GPP technical specification group radio access network, "Physical layer aspects for evolved Universal Terrestrial Radio Access (UTRA)", TS 25.814, (2007-09), Release 7.

The UTRAN (UMTS Terrestrial Radio Access Net) Iub interface is described in the document, "UTRAN Iub interface: general aspects and principles", of the 3GPP technical specification group radio access network, TS 25.430, (2007-09), Release V7.5.0.

The Node B Application Part (NBAP) signalling is described in the document, "UTRAN Iub interface Node B Application Part (NBAP) signalling", of the 3GPP technical specification group radio access network, TS 25.433, (2008-06), Release V8.1.0.

Increasing the density of users sharing radio resources may increase the interference in a HSPA uplink. The HSPA uplink interference may comprise 3 components intra-cell interference, inter-cell interference and thermal noise interference.

It may be desirable to provide a more effective high speed access link within a communication network.

Summary of the invention

According to exemplary embodiments of the present invention a coordinating apparatus, a base station, a terminal, a method for controlling the base station or the terminal, a program element for controlling the base station or the terminal, a method for operating the base station or the terminal, a program element for operating the base station or the terminal and a use of a method for soft handover for determining the type of a terminal may be provided.

According to an exemplary embodiment of the present invention a coordinating apparatus for controlling a base station or a terminal may be provided, wherein the coordinating apparatus may comprise a terminal type determining device and a coordinating device. The terminal type determining device may be adapted to determine the type of a terminal and the coordinating device may be adapted to transmit a control signal to at least one of the base station and the terminal.

For selecting between the base station and the terminal the coordinating apparatus may have a switching device.

The control signal may comprise information allowing to control a transmit power used for a communication between the terminal and the base station during a predefined time period in accordance with the determined terminal type.

According to a further exemplary embodiment of the present invention a base station may be described. The base station may generate cells by transmitting radio signals and the base station may comprise a receiving device and a cell coordinating device. The receiving device may be adapted to receive a control signal comprising information for controlling a transmit power used for a communication between a terminal and the base station. The base station may receive this information during a predefined time period. The transmit power may depend on a terminal type of the terminal.

The cell coordinating device may be adapted to control the transmit power used for a communication between the terminal and the base station in accordance with the received information. I.e. between the base station and the terminal a communication channel may be established to allow the base station to communicate with the terminal. This communication channel may use a limited power, i.e. the maximum value of the limited power may be determined by the transmitted information.

According to yet another exemplary embodiment of the present invention a terminal may be provided, comprising a terminal receiving device and a power controlling device. The terminal receiving device may be adapted to receive a control signal comprising information for controlling a transmit power used for a communication between the terminal and a base station during a predefined time period in accordance with a terminal type of the terminal.

The power controlling device may be adapted to control the transmit power used for the communication between the terminal and the base station in accordance with the received information.

Furthermore, according to another exemplary embodiment of the present invention a method for controlling a base station or a terminal may be provided. The method may comprise determining the type of the terminal and transmitting a control signal to at least one of the base station and the terminal.

The control signal may comprise information allowing to control respectively to regulate a transmit power used for a communication between the terminal and the base station during a predefined time period in accordance with the determined terminal type.

According to another exemplary embodiment of the present invention a program element for controlling a base station may be provided, which program element, when being executed by a processor, may be adapted to carry out the method for controlling a base station or a terminal.

According to yet another exemplary embodiment of the present invention a computer readable medium may be provided, the computer readable medium may comprise program code for controlling a base station. The program code, when being executed by a processor, is adapted to carry out the method for controlling a base station or a terminal.

A base station and a terminal may be examples of network elements.

According to another exemplary embodiment of the present invention a method for operating a base station and/or operating a terminal may be provided. The method may comprise receiving a control signal comprising information for controlling a transmit power used for a communication between the terminal and the base station during a predefined time period in accordance with a terminal type of the terminal.

The method may further comprise controlling the transmit power used for a communication between the terminal and the base station in accordance with the received information.

In particular, the received information may comprise a rule. Such a rule may be used for controlling a power offset. A terminal or base station receiving a rule may restrict the maximum data rate or the power offset for the terminal in certain virtual HARQ processes in accordance with the rule. According to another exemplary embodiment, a terminal or base station receiving a rule may inhibit the transmission for certain virtual HARQ processes for certain terminals, e.g. cell edge terminals.

Furthermore, the rule may be a mapping between virtual HARQ processes and real HARQ processes. Such a mapping may allow for interference coordination. Interference coordination may be based on sharing 8 HARQ processes in re-use patterns of 3 or 7.

According to another exemplary embodiment of the present invention a program element for operating a base station or a terminal may be provided, which program element, when being executed by a processor, is adapted to carry out the method for operating a base station and/or operating a terminal.

According to yet another exemplary embodiment of the present invention a computer readable medium may be provided, the computer readable medium may comprise program code for operating a base station or a terminal. The program code, when being executed by a processor, may be adapted to carry out the method for operating a base station and/or operating a terminal.

According to another exemplary embodiment of the present invention using a method of soft handover for determining a type of a terminal may be provided.

A central coordinating apparatus connected to a plurality of base stations may have an overview over the relation of different cells generated or supplied by the base stations. In particular, the central coordinating apparatus may have an overview over at least one terminal or mobile station travelling through the plurality of cells. In particular the central coordinating apparatus may track the movement of the terminals.

Dependent on the actual position within a cell, it may be possible to limit the transmit power used for a communication between the terminal and the base station. This power limitation may also depend on the relative or absolute position between pluralities of terminals, i.e. at least two terminals. Such limitation may be made during a predefined time period in order to balance the power limitations between different terminals.

In order to differentiate between two terminals in different positions or between two terminals having different characteristics, these two terminals may be classified as a cell center terminal and a cell edge terminal. A cell center terminal may be a terminal located closer to the center of a cell than a cell edge terminal. However, the terms center and edge may only be used as names to differentiate between to classes of terminals. The differentiation thus may also be made based on characteristics as for instance fast moving terminal and slow moving terminal, platinum subscriber and bronze subscriber or good receiver terminals and bad receiver terminals etc.. Thus, a differentiation may be made based on the velocity of moving, based on the quality of service (QOS) or on the quality of the receiver of the corresponding terminal.

The control signal may comprise a rule for interference coordination. For example the rule may be a power offset, which power offset may determine a maximum power which could be used by the terminal or by the base station for a transmission.

The control signal for interference coordination may affect the ratio of E-DPDCH to DPCCH power. Thus it may affect the E-DPDCH only. The control signal may impact both the terminals transmit power and the SIR (Signal to Interference Ratio) at the base station.

Thus, control signalling for interference coordination may differ from a power control loop, e.g. comprising an inner control loop between terminal and base station and an outer control loop between base station and coordinating apparatus. The power control loop may change the power of DPCCH and E-DPDCH equally on a regular basis. It may impact the terminals transmit power, but the inner loop may aim to keep the receive SIR at the base station constant.

Terminals belonging to different groups and thus having different predefined characteristics may limit the power at different time periods in order to prevent interferences one with another. The central coordinating apparatus may determine the corresponding time periods and may control the power distribution accordingly.

Also a power limitation may be made between terminals belonging to the same group, e.g. between two edge terminals.

In other words this may mean that a coordinating apparatus may be used, for controlling a network node. The coordinating apparatus may comprise a terminal type determining device, a neighbour determining device and a coordinating device. The terminal type determining device may be adapted to determine the type of a terminal, of a mobile station (MS) or of a user equipment (UE). The type of the terminal, which may be identified by the type determining device, may at least be one type selected from a centre type and an edge type.

The terminal may be located in at least one of a predefined plurality of cells.

The neighbour determining device may be adapted to determine or to select a number of cells of the predefined plurality of cells, wherein the determined number of cells may have a neighbour relationship. E.g. the cells may be located in a close range.

The coordinating device may be adapted to divide a time channel in a number of time periods according to the number of cells having a neighbour relationship, if the terminal is determined as an edge type terminal. The time channel may be established between the terminal and the network node. Thus, if at least one edge type terminal may exist in the predefined plurality of cells, which terminal may interfere with other terminals, such dividing may be performed. The cells may be served by the network nodes.

The coordinating device may be further adapted to allow the terminal determined as an edge type terminal during at least one of the number of time periods to access the time channel with a higher power than the power used for other edge type terminals of other cells.

Thus, the coordinating device may be adapted to schedule time periods of the time channel. The time periods may be virtual time periods.

Furthermore, the type of the terminal, which may be identified by the terminal type determining device, may be at least one type selected from a centre type and an edge type.

Furthermore, a network node may be provided, which network node may provide cell based access to a communication network for a UE by the communication network providing cells. The network node may comprise a receiving device and a cell coordinating device.

The receiving device may be adapted to receive information about the number of time periods for a terminal. The terminal may be of an edge type. This edge type terminal may be located in at least one cell of the network node.

The cell coordinating device may further allow the terminal of the edge type to access a time channel during at least one of a number of time periods of the time channel with a higher power than the power of other edge type terminals and/or of centre type terminals of other cells at the same time. The time channel may be established between the terminal and the network node.

A time channel in this text may describe a channel for exchanging information or a channel for exchanging signals which may base on time multiplex technologies or on Time Division Duplex (TDD) technologies. TDD may use a single frequency to transmit signals in both the upstream direction and the downstream direction. This technique could also be applied to FDD, although FDD has a different channel structure with different names. In particular, the time channel is an E-DPDCH. An E-DPDCH may be an up-link channel and may be divided into TTIs or STTIs. An hybrid ARQ process may be used for error correction.

Any high speed access link, e.g. HSDPA or HSUPA could comprise a time channel.

FDD (Frequency Division Duplex) may be an alternative to the TDD technology, wherein the FDD technology may use different frequencies to differentiate between the upstream direction and the downstream direction. In the case of FDD different frequencies may be used instead of different time periods.

Furthermore a method for controlling a network node may comprise determining a type of a terminal located in at least one of a predefined plurality of cells. The type for the terminal may be at least one type selected from a centre type and an edge type.

Furthermore, the method may provide determining a number of cells of the predefined plurality of cells, wherein the number of cells may have a neighbour relationship.

If the terminal may be determined as an edge type terminal, a time channel established between the terminal and the network node may be divided in a number of time periods according to the number of cells having a neighbour relationship.

The method may further comprise allowing the terminal determined as an edge type terminal during at least one of the number of time periods to access the time channel with a higher power than the power of other edge type terminals or of centre type terminals of other cells.

Thus, interference coordination may be provided which may allow for determining from a central position within the network a power ratio or an power offset for a predetermined time period in accordance with a neighbour relation of cells and/or based on terminal types of user equipment. Furthermore, a program element for controlling a network node may be provided. The program element, when being executed by a processor, is adapted to carry out the method for controlling a network node.

A computer readable medium may also be provided, the computer readable medium may comprise program code for controlling a network. The program code, when being executed by a processor, may be adapted to carry out the method for controlling a network node.

A computer-readable medium may be a floppy disk, a hard disk, an USB (Universal Serial Bus) storage device, a RAM (Random Access Memory), a ROM (Read Only Memory) and an EPROM (Erasable Programmable Read Only Memory). A computer-readable medium may also be a data communication network, allowing for downloading program code.

According to another exemplary embodiment of the present invention a method for operating a network node may be described, which network node provides a plurality of cells. Thus, a region may be divided into cells. The method may comprise receiving information about a number of time periods within a time channel for a terminal of an edge type located in at least one cell of the network node.

Furthermore, the method may comprise allowing the terminal of the edge type during at least one of the number of time periods of the time channel established between the terminal and the network node to access the time channel with a higher power then the power of other edge type terminals of other cells. The terminal of the edge type may be an edge type terminal.

A program element for operating a network node providing cells may be provided according to another exemplary embodiment of the present invention, which program element, when being executed by a processor, may be adapted to carry out the method for operating a network node.

Furthermore as an example, a computer readable medium may be provided, wherein the computer readable medium comprises program code, which program code, when being executed by a processor may be adapted to carry out the method for operating a network node.

According to another exemplary embodiment of the present invention the use of a method for soft handover for determining a type of a terminal may be provided.

Thus, using a method for soft handover may be adapted in order to deliver a classification for a UE.

The terminal type determining device may classify a UE as a cell edge UE and as a cell centre user or UE, respectively. This classification may also comprise classifying the user of the corresponding user equipment, the user of the corresponding terminal or the user of the corresponding mobile terminal as a cell edge user and as a cell centre user, respectively.

An example for UE may be a mobile phone, a notebook comprising a wireless accessing device or a PDA (Personal Digital Assistant).

A network node, in particular a Node B or a base station (BS), in particular a base station for a mobile network, may allow dividing an area in a plurality of cells. The base station may also supply a single cell. The shape of the cells, may be formed by using a certain type of antenna. Thus, an omni antenna may support a single cell, whereas a beam antenna or a directive antenna may allow forming sectors, wherein each sector may be a cell. The sectors of a Node B may be seen as cells having a neighbour relationship. A base station may allocate a UE to a cell. Thus, a plurality of UEs may be allocated to corresponding cells. The allocation to a particular cell or sector may be based on received signal strength within the UE.

UEs within the same cell may be differentiated by employing different codes, different time slots or different frequencies.

Intra-cell interference, i.e. two UE within the same cell interfere, may arise because signals between UEs are substantially not orthogonal. Intra-cell interference thus, may be reduced by increasing the orthogonality (for example by synchronisation and Orthogonal Variable Spreading Factor Codes (OVSF) user separation) or by means of interference cancellation algorithms.

If the intra-cell interference may substantially be mitigated, then the next largest source of interference may be inter-cell interference. Inter-cell interference may exist if two UEs of different cells interfere.

An idea of this invention may be coordinating a plurality of BSs, in particular coordinating the cells of a plurality of BSs or a plurality of time channels within a plurality of cells, in order to reduce inter-cell interference between the plurality of cells. The BSs may be coordinated from a central location. A coordinating apparatus, for example an RNC, may be located in such a centralised location. By appropriate signalling between pluralities of RNCs the RNCs of a wireless network may be coordinated. Furthermore, signalling may be provided which signalling allows for the application of interference coordination of HSPA.

Thus, inter-cell interference for a high speed channel such as described by HSPA may be reduced. For signalling between an RNC and a BS additional Iub signalling messages may be provided. For example a protocol may be extended. A Radio Resource Management (RRM) may be supported by these Iub signalling messages, which signalling messages may allow for a coordination between cells.

The coordination of terminals at cell edges may reduce interference between neighbour cells, in particular at the edge of cells. The coordination may also allow for increasing the spectral efficiency of a network system and may also allow for increasing the customer satisfaction.

HSPA may use a single frequency for a plurality of UEs located within a corresponding cell. HSPA may not possess the concept of frequency division modulation. HSPA may comprise a HUSPA uplink, which uplink may be based on the technical concept of FDD (Frequency Division Duplexing).

The technical concept of FDD may provide a time channel on different single frequencies, in particular an uplink channel or an E-DPDCH. This time channel may be divided in time periods of 2 ms or in time periods of 10 ms. Thus, the time channel may be time multiplexed and the time channel may comprise a frame structure in form of time periods.

A time period of 2ms may be a Short Transmission Time Interval (STTI). A time period of 10 ms may be a Transmission Time Interval (TTI). An STTI may comprise 3 time slots. A TTI may comprise 15 time slots. A sub frame may comprise 3 slots and a radio frame 5 sub-frames.

Each UE may have an own code within a time channel. Thus, a plurality of UE may use the time channel on a single frequency. However, the time channels or the E-DPDCH of different cells may use the same single frequency. Coordinating the cells, UEs or time channels may comprise assigning low data rates to UEs having high interference. The low data rates may substantially only be provided during a predefined time period in coordination with other time periods of other time channels within other cells.

Furthermore, coordinating may comprise soft-reusing partitioning and applying power masks to HSUPA. Soft re-use partitioning may imply that an inter-cell re-use pattern is applied for some or all users, but at any given point in time there may always be transmissions in all of the cells. For example, soft-reuse partitioning may be based on the idea that different re-use factors are used at the edge of a cell or the cell edge and in a centre area of a cell or in the middle of the cell. For example a value for re-use may be greater than 1 at the edge of a cell, which may imply that cell edge users transmit only part of the time or on some frequencies and a value for re-use may equal to 1 in the middle of the cell, which may imply that central users transmit all of the time. In general, the re-use may be a reuse of a frequency or of a time slot, although for Wideband Code Division Multiple Access (WCDMA) the re-use may have to be on a time basis.

A power mask may be employed to use a higher power in the middle of a cell and a lower power at the edge. Thus, a power mask may describe a local distribution of power.

Thus, interference may be reduced by embedding the centre of a cell in the edge of a cell, such that the edge may be a barrier for the centre or the edge may encapsulate the centre of the cell. In other words, the edge area may form a shell around the centre area of the cell comprising a physical separation between users at the centre of the cells and users in other cells, thus preventing inter-cell interference by keeping cell centre UEs in distance to different cells. The shell may be formed by allowing UEs within this shell area or within the edge area to transmit signals with a reduced power level or with a reduced data rate. In order to balance the distribution of data rates between edge UEs and centre UEs the edge UEs may be allowed sending with higher power or with a higher data rate in certain time periods. These certain time periods may be coordinated such, that corresponding edge terminals of different cells use the high data rates at different time periods. In other words, the coordination may comprise coordinating the power level of cell centre UEs and cell edge UEs of the same node and coordinating the power level of the cell edge UEs of different cells.

Therefore, signalling on Iub or IuB may be provided in order to restrict cell edge transmissions in certain processes or time intervals and / or in order to restrict signal maximum data rates for cell centre UEs. The transmission may be restricted by limited power, limited data rate, restricted modulation or by the employed coding scheme. Users or UEs may also be restricted such that the UEs use predefined time-periods for their transmission.

By using the Iub signalling, neighbour cells may be supplied with information to ensure that neighbour cell interference or inter-cell interference may be reduced. E.g. different time-intervals or different time periods may be used by cell edge users of neighbour cells.

Synchronized base stations may allow for coordinating.

The time periods generated by dividing or partitioning the time channel may be a Transmission Time Interval (TTI), a sub-frame or a radio frame. These time periods may be repetitive and may have the same duration. The time periods may be synchronous with Hybrid Automatic Repeat Request (HARQ) processes since the HARQ may be used to transport information in a TTI, a sub-frame or a radio frame. In other words, allocating HARQ processes to TTIs may make the TTIs repetitive. For allocating TTIs to time periods this allocation is repeated every 8 TTIs, according to the repetition rate of the HARQ processes.

According to yet another exemplary embodiment of the present invention the transmit power may be controlled by at least one control mechanism selected from the group of control mechanisms consisting of controlling a data rate of the communication between the terminal and the base station and controlling a power ratio of a communication channel between the terminal and the base station during a predefined time period.

Furthermore, according to another exemplary embodiment of the present invention the power ratio may be the power ratio of an E-DPDCH and a DPCCH. I.e. the relation of the maximum power allowed for the E-DPDCH and the maximum power allowed for the DPCCH.

According to another exemplary embodiment of the present invention the time period may be at least one time period selected from the group consisting of a radio frame, a subframe, an instance of a HARQ process, a TTI, an STTI and a slot.

According to another exemplary embodiment of the present invention the coordinating apparatus (100) may at least be one of a Radio Network Controller and a base station. E.g. the coordinating apparatus may be comprised by a base station. Such a base station may be used as a base station which coordinates other base stations.

According to a further exemplary embodiment of the present invention the coordinating device may further be adapted for mapping a virtual time period to a predefined time period.

Thus a timely order of limiting the transmit power may be determined. The mapping schema may be sent as information in the control signal.

According to another exemplary embodiment of the present invention the type of the terminal (105) may be at least one type selected from a centre type and an edge type.

According to yet another exemplary embodiment of the present invention the type of the terminal may be determined by a neighbour cell measurement result, the measurement conducted by the terminal.

According to another exemplary embodiment of the present invention the terminal type determining device may be further adapted to determine the type of the terminal by using a soft handover method.

An existing soft handover method may allow providing information which may be used in order to classify a terminal.

According to a further exemplary embodiment of the present invention the terminal type determining device may be further adapted to determine the further type of the further terminal, when the base station and/or the terminal may be located in a cell and a further base station or a further terminal may be located in a further cell. I.e. the base station may generate the cell and the further base station may generate the further cell by transmitting radio signals. A base station located in a cell may also be as an example a base station serving a cell without substantially being located inside the cell area. In particular, a base station having a plurality of cells or sectors may be a basestation located in a cell.

The coordinating apparatus may be further adapted to transmit a further control signal to at least one of the further base station and the further terminal.

This further control signal may further comprise information allowing to control a further transmit power used for a further communication between the further terminal and the further base station during a further predefined time period in accordance with the further determined terminal type.

The information may depend on the first cell and the further information may depend on the further cell.

In an exemplary embodiment the information may differ from the further information.

In another exemplary embodiment the information may be equal to the further information.

In other words, the coordinating apparatus may handle a base station or a further base station and/or a terminal or a further terminal in a common manner. Thus, all aspects described for a single terminal and/or a single base station may also apply for a plurality of terminals and/or base stations controlled by a coordinating apparatus. In a particular embodiment a first base station, a first terminal , a second base station and a second terminal may be provided.

In particular, the coordinating apparatus may determine the type of each terminal or of each of a plurality of terminals. Dependent on the corresponding determined type of the terminal, the coordinating apparatus may send a control signal to a corresponding terminal and/or to a corresponding base station in order to control of a power used for communicating between the corresponding terminal and the corresponding base station.

According to a further exemplary embodiment of the present invention the cell coordinating device may be adapted to control the transmit power of the terminal and/or the further transmit power of the further terminal such that during a predefined time period the terminal may transmit with a higher transmit power than the further terminal. The terminal may be determined as an edge type terminal, whereas the further terminal may be determined as a further terminal of an edge type.

Thus, the maximum transmit power used by the edge terminal and used by the further edge terminal may be coordinated in order to prevent that both edge terminals use the same maximum power at the same time.

According to another exemplary embodiment of the present invention the power ratio determined by the base station may be the power ratio of an E-DPDCH and a DPCCH or the ratio of E-DPDCH power to DPCCH power.

According to another exemplary embodiment of the present invention the time period may be at least one time period selected from the group consisting of a radio frame, a sub-frame, an instance of a HARQ process, a TTI, an STTI and a slot.

According to yet another exemplary embodiment of the present invention the type of the terminal may at least be one type selected from a centre type and an edge type.

According to a further exemplary embodiment of the present invention the power controlling device of the terminal may be adapted to control the transmit power used for the communication by at least one control mechanism selected from the group of control mechanisms consisting of controlling a data rate of the communication between the terminal and the base station and controlling a power ratio of a communication channel between the terminal and the base station during a predefined time period.

According to yet another exemplary embodiment of the present invention the power ratio may be the power ratio of an E-DPDCH and a DPCCH.

According to another exemplary embodiment of the present invention the type of the terminal may at least be one type selected from a centre type and an edge type.

According to a further exemplary embodiment of the present invention the terminal receiving device may be adapted to determine a quality characteristic of the communication by receiving a pilot signal.

This quality characteristic may be used to control a closed loop.

According to another exemplary embodiment of the present invention the terminal may at least be one terminal selected from the group of terminals consisting of a mobile phone, a personal digital assistant, a mobile data communication card, a navigation device and a laptop.

Furthermore, a re-use pattern may be mapped to the HARQ processes. The re-use pattern may correspond to the local distribution of cells.

This mapping of a re-use pattern may allow determining in which time period an event may happen. In other words, since the time periods may be repeated with a repetition frequency within a cell a certain configuration may be repeated. This repetition may allow providing in a predefined time period a cell configuration which may allow edge UEs to send signals with a high power level. This configuration may be coordinated with a configuration for power levels for cell centre UEs of the same cell and at the same time this configuration may be coordinated with a configuration for power levels for edge UEs of other cells.

According to a further exemplary embodiment of the present invention the coordinating device may further be adapted for mapping virtual time periods to the number of time periods.

For example, by virtual mapping a difference may be adjusted or balanced, which difference may arise by mapping re-use pattern when the re-use pattern may not exactly divide into the number of time periods.

Furthermore, according to an exemplary embodiment, the coordination apparatus may comprise a central interface device, wherein the central interface device may be adapted to connect the network node and to control the network node.

The central interface may be an Iub or an Iur interface and may allow the coordinating apparatus to be placed in a central position of a network, e.g. by providing a plurality of interfaces for connecting a Node B. Thus, the coordinating apparatus may monitor the network and may control base stations, for example Node Bs, which may be connected to the central interface. The central interface may allow for a star configuration. The central interface device may allow for centrally coordinating the UEs.

Thus, the control signal may be an Iub frame or an Iur frame. In particular, the information for controlling the power may be coded in a field of an Iub frame or of an Iur frame.

According to another exemplary embodiment of the present invention the terminal type determining device may be further adapted to determine the type of the terminal by using a soft handover method or a portion of a soft handover method.

A soft handover method or soft handover functionality may be implemented in a coordinating apparatus for determining the position of a UE in a cell. The reuse of an existing functionality may allow easily implementing a coordinating of network nodes.

A soft handover method may comprise determining the active set of a mobile terminal. For terminating or determining an active set, the terminal may receive a request for measuring neighbour cells, e.g. the signal strength of the own cell in relation to the signal strength of neighbour cells, and to provide the result of the measurement to the corresponding own base station or to the controlling apparatus. The measurement may comprise measuring a receive power or measuring an interference level. The results of such measurements may be used to determine the type of the terminal and to coordinate the interference.

Furthermore, the coordinating device may be further adapted to indicate to the network node information about the time periods determined by the coordinating device.

Informing the network node about the time periods in addition to the UE may allow synchronizing a network node and a UE. Also, informing the network node may allow for the Node B scheduler to plan and set the Node B controlled E-DPDCH levels appropriately, and to ensure that the Node B is able to predict the UE logic for responding to grant commands. A network node may also set power levels and may consider information about the coordination of power levels for the UEs determined by the coordinating apparatus.

The Node B may comprise the Node B scheduler, wherein the Node B scheduler may be adapted to plan and/or to set the Node B controlled E-DPDCH power levels appropriately. According to a further exemplary embodiment of the present invention the coordinating apparatus may be a Radio Network Controller (RNC).

An existing RNC of a UMTS architecture may be extended with a coordination functionality.

Additionally, according to a further exemplary embodiment of the invention, the coordinating device may be adapted to generate control information for the network node, the base station or the terminal in a format based on at least one of an IuB interface standard and an Iur interface standard. In particular, a communication between the terminal and a base station may base on an Uu interface, which may be adapted accordingly.

As an example a network node and a coordinating apparatus may be connected by an Iub interface or an IuB interface and a plurality of coordinating apparatus may be connected by an Iur interface. Providing coordinating signals in a format according to the IuB and/or the Iur standard may allow coordinating the base stations, RNCs, coordinating apparatus or network nodes and in particular the associated cells.

Furthermore, the cell coordinating device may be further adapted to configure a maximum Enhanced Dedicated Physical Data Channel (E-DPDCH) level for the time channel.

The maximum E-DPDCH level may be a maximum power level. The time channel may be an up-link. Furthermore, an E-DPDCH may be a slot of a radio frame. Limiting the maximum power level of the E-DPDCH may allow reducing an interference generated by sending information with a high data rate on the up-link. Setting a low power level may reduce the data rate of a UE. Setting a high power level may increase the data rate of a UE. In other words, the data rate of a communication between the terminal and the base station may be amended.

Furthermore, the network node may be a Node B.

Additionally, the use of the method for soft handover for determining a type of a terminal or a type of a UE may further comprise using a set of Common Pilot Channels. This set may comprise an active Common Pilot Channel set, a monitored Common Pilot Channel set and at least one of a detected Common Pilot Channels set.

It has also to be noted that exemplary embodiments of the invention have been described with reference to different subject-matters. In particular, some exemplary embodiments have been described with reference to apparatus type claims whereas other exemplary embodiments have been described with reference to method type claims or use type claims. However, a person skilled in the art will gather from the above and the following description that, unless other notified, in addition to any combination between features belonging to one type of subject-matter also any combination between features relating to different subject-matters, in particular between features of the apparatus claims and the features of the method claims is considered to be disclosed with this application.

These and other aspects of the present invention will become apparent from and elucidated with reference to the embodiments described hereinafter.

Exemplary embodiments of the present invention will be described in the following with reference to the following drawings.

Brief description of the drawings

Fig. 1 shows a block diagram of a coordinating apparatus according to an exemplary embodiment of the present invention.

Fig. 2 shows a block diagram of a network node according to an exemplary embodiment of the present invention.

Fig. 3 shows a mapping of virtual time periods to time periods according to an exemplary embodiment of the present invention.

Fig. 4 shows a re-use pattern for a maximum power level within cells of a mobile network according to an exemplary embodiment of the present invention.

Fig. 5 shows a first UE E-DPDCH power level configuration for a cell edge UE according to an exemplary embodiment of the present invention.

Fig. 6 shows a second UE E-DPDCH power level configuration for a cell edge UE according to an exemplary embodiment of the present invention.

Fig. 7 shows a UE E-DPDCH power level configuration for a cell centre UE according to an exemplary embodiment of the present invention.

Fig. 8 shows a diagram for type determination of a UE according to an exemplary embodiment of the present invention.

Fig. 9 shows a signalling diagram for edge monitoring according to an exemplary embodiment of the present invention.

Fig. 10 shows a further signalling diagram for edge monitoring according to an exemplary embodiment of the present invention.

Fig. 11 shows a frame structure of a radio frame for a better understanding of the present invention.

Fig. 12 shows a terminal according to an exemplary embodiment of the present invention.

Fig. 13 shows a block diagram of a communication network system according to an exemplary embodiment of the present invention.

Fig. 14 shows a first step of a message flow between a coordinating device and a network node for interference coordination in a communication network according to an exemplary embodiment of the present invention.

Fig. 15 shows a second step of a message flow between a coordinating device and a network node for interference coordination in a communication network according to an exemplary embodiment of the present invention.

Fig. 16 shows a message sequence diagram for steps 1 and 2 of Figs. 14 and 15 according to an exemplary embodiment of the present invention.

Fig. 17 shows a first step of a message flow between a coordinating device, a network node and a terminal for interference coordination in a communication network according to an exemplary embodiment of the present invention.

Fig. 18 shows a second step of a message flow between a coordinating device, a network node and a terminal for interference coordination in a communication network according to an exemplary embodiment of the present invention.

Fig. 19 shows a message sequence diagram for steps 1 and 2 of Figs. 17 and 18 according to an exemplary embodiment of the present invention.

Fig. 20 shows a first step of a message flow between a coordinating device and a terminal for interference coordination in a communication network according to an exemplary embodiment of the present invention.

Fig. 21 shows a second step of a message flow between a coordinating device and a terminal for interference coordination in a communication network according to an exemplary embodiment of the present invention.

Fig. 22 shows a message sequence diagram for steps 1 and 2 of Figs. 20 and 21 according to an exemplary embodiment of the present invention.

Detailed description

The illustration in the drawings is schematic. In different drawings, similar or identical elements are provided with the same reference numerals.

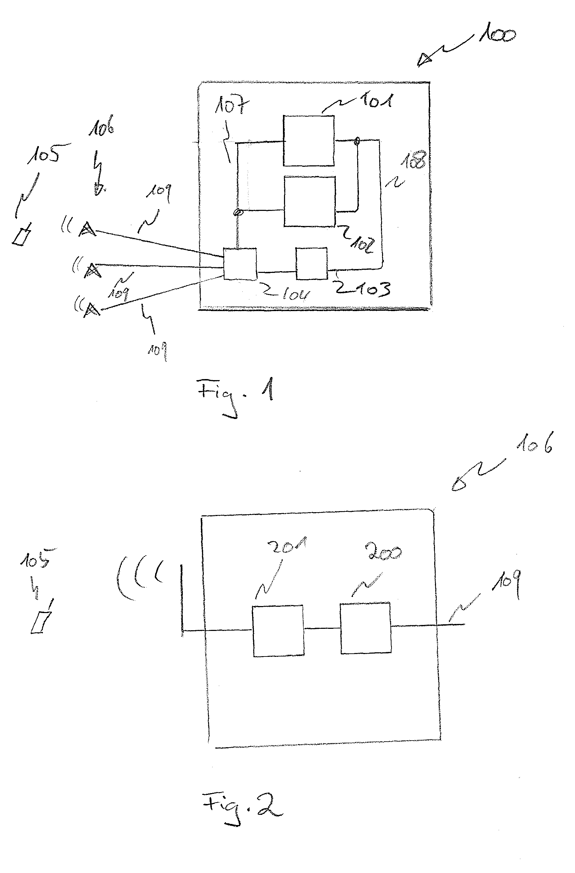

Fig. 1 shows a coordinating apparatus 100 according to an exemplary embodiment of the present invention. The coordinating apparatus 100 comprises the terminal type determining device 101, the neighbour determining device 102 and the coordinating device 103. The terminal type determining device 101 determines the type of a UE 105, which UE 105 may be associated with one of the Node Bs 106. In particular, the UE 105 is located in one of the cells provided by the Node Bs 106.

The Node Bs 106 are connected to the central interface 104. The central interface 104 enables the coordinating apparatus 100 to control a plurality of Node Bs 106. The coordinating apparatus 100 also comprises the central interface 104.

The central interface 104 is connected to the terminal type determining device 101 and to the neighbour determining device 102 via the physical connection 107. Furthermore, the terminal type determining device 101 and the neighbour determining device 102 are connected to the coordinating device 103 via physical connection 108.

The Node Bs 106 are connected to the coordinating apparatus 100 via the lub interfaces 109. The coordinating apparatus 100 may be a RNC 100.

A Node B 106 or a network node 106 is shown in Fig. 2. The Node B 106 comprises the receiving device 200 and the cell coordinating device 201. The coordinating device 201 may limit the power for a UE 105 to access a time channel.

The receiving device 200 is connected to the lub interface 109.

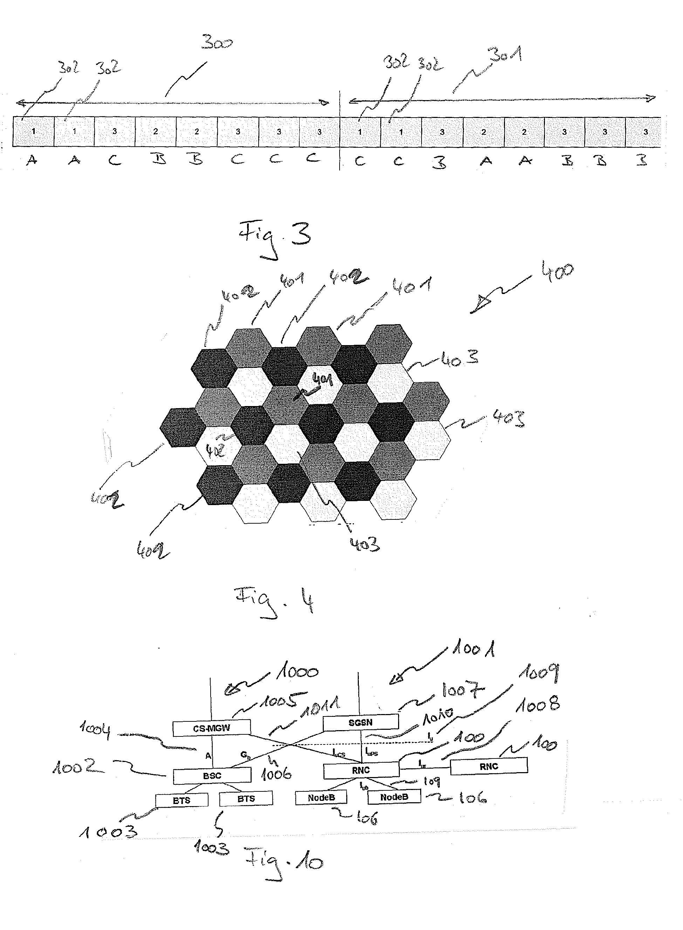

Fig. 3 shows a mapping of virtual time periods A, B, C to time periods 302 of a time channel 300, 301 according to an exemplary embodiment of the present invention. Fig. 3 furthermore shows the allocation of STTIs 302 1 - 8 to first 8 HARQ processes 300 and the allocation of STTIs 302 9 - 16 to second 8 HARQ processes 301. Since the 8 HARQ processes are repetitive, this allocation is repeated every 8 STTIs. The 8 HARQ process pattern may repeat but may be asynchronous to the radio frame length.

It is assumed that the base stations are synchronised. Furthermore, it is assumed that a timing mechanism is introduced such that uplink receive timings are synchronised at each Node B. This could be achieved for example by aligning downlink timings.

The transmission time 300, 301 of a time channel between UE and Node B is divided into a number of (physical) time periods 302. The time periods 302 are repetitive and synchronous with the HARQ. An example of such a time periods are STTIs 302. The different STTIs 302 have substantially equal duration.

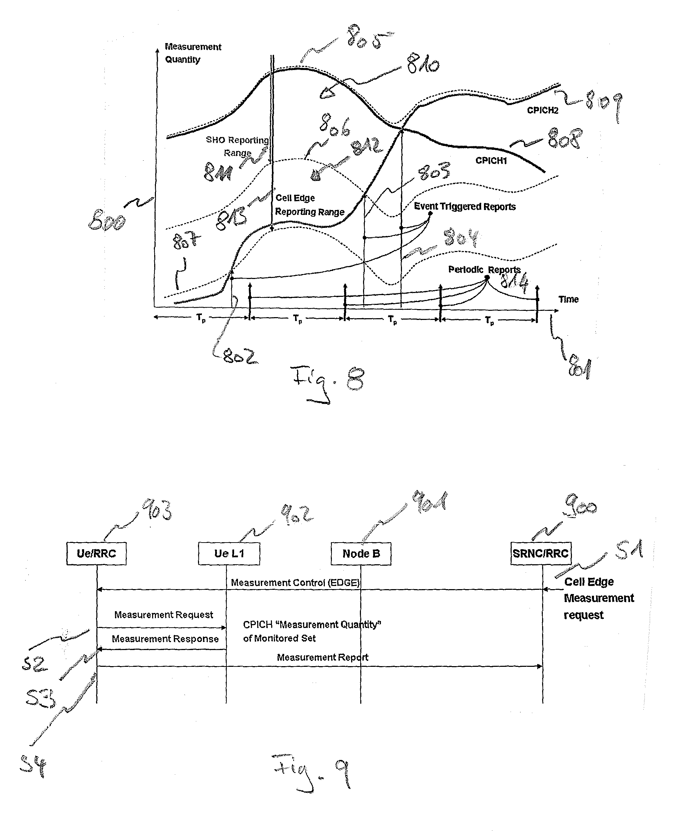

In Fig. 3, 8 HARQ processes exist during the transmission time 300, 301 and thus STTIs 302 can be allocated to time periods 302. The allocation of STTIs 302 to time periods 302 forms an allocation pattern. Since the HARQ processes repeat after 8 time periods 302, the allocation pattern also repeats every 8 STTIs. Thus, a periodical frame structure 300, 301 may be provided for the transmission time 300, 301. The transmission time 300, 301, the physical time period 300, 301 or the time channel 300, 301 is further divided into the time periods 302 or regular time periods 302. The frame structure 300, 301 may allow for aligning different time channels 300, 301 of different cells. STTIs may be time periods during which time periods a UE or a network element sends traffic.

Such transmission times 300, 301 exist for each UE in each cell. Therefore, a plurality of transmission times 300, 301 are used in parallel. Consequently, different transmissions during transmission times 300, 301 within different cells may interfere. These transmissions may interfere, if UEs belonging to different cells using the same frequency for a transmission are in a close range. The different physical time periods 302 are synchronous since the Node Bs are synchronized.

In other words, UEs located at the edge of different cells or UEs located at the border of cells may interfere.

In order to prevent such inter-cell interference, the transmission times 300, 301 of different cells may be coordinated such, that during the same STTI 302 the edge UE belonging to different cells transmit signals with different power levels. Thus, at different times may only one cell, which is surrounded by other cells, allow the edge UE located in that cell to send with a high power. An edge UE is a UE which is located within a certain cell close to the border of the cell. How close a UE has to be to a border in order to be considered as an edge UE may be predetermined and settable. A set of cells may be used for considering the type of UE.

In order to achieve a coordination between different cells, a re-use pattern may be employed for allowing edge UEs sending with high power levels. This re-use pattern may be centrally administrated and monitored by an RNC 100 or by a plurality of RNCs 100, which plurality of RNCs may communicate one with another.

Fig. 4 shows a cellular network 400 or wireless network 400 comprising a plurality of cells 401, 402, 403. The cells in Fig. 4 have a hexagonal shape. Thus, every cell 401, 402, 403 is surrounded by 6 cells. It is assumed, that inter-cell interference effects can be reduced, if between cells using the same timing, e.g. edge cells sending with maximum power, other cells are located. These other cells may form a barrier defending inter-cell interference. Or in other words, the cells may be coordinated such, that edge UE of different cells are prevented from sending at the same time with maximal power.

In Fig. 4 three types of cells are differentiated. First cells 401 allow an edge UE sending with high power or maximal power in a first time period. Second cells 402 allow an edge UE sending with high power or maximal power during a second time period. Third cells 402 allow an edge UE sending with high power or maximal power during a third time period. After the third time period, this cycle may be repeated. This cycle may also be named as a re-use pattern.

Re-use patterns can be either 3 or 7. Since neither of these numbers divide into 8, which is the period of the HARQ processes, some time periods of the re-use pattern will be longer than others if the re-use pattern is mapped to the HARQ processes. This is shown in Fig. 3 by the numbers used for the time periods 302. Number 1 comprises or is allocated to two time periods 302, Number 2 is allocated to one time period and number 3 is allocated to four time periods. Thus, time periods 1, 2, 3 are generated by combining a selection of time periods 302.

Some time periods 1, 2, 3 may comprise a plurality of time periods 302. Thus, some time periods are larger than others. Consequently, the generation of time periods may lead to an unequal distribution of resources.

An unequal distribution of resources may substantially be prevented by implementing a virtual to actual mapping of time periods. The virtual mapping changes in every repetition of the HARQ cycle 300, 301. This would allow for a fair sharing of resources between base stations 106. In other words, over a long time in the average substantially equal durations allowing high power transmission may be allocated for every cell.

In a HSUPA system the 8 HARQ processes 300, 301 are split into 3 virtual time periods A, B, C as shown in Fig. 3. Furthermore as indicated in Fig. 3 by numbers 1, 2, 3 three time periods 1, 2, 3 are mapped to the time periods 302. The mapping between time periods 1, 2, 3 and virtual time periods A, B, C is shown in the following table. The mapping switches every 8 STTIs and the mapping sequence repeats every 24 STTIs. How virtual time periods A, B, C are mapped to time periods 1, 2, 3 is shown in Table 1. The time periods 1, 2, 3 are part of physical time periods 300, 301.

Table 1:

| Virtual Time Period | Physical Time Period 300 (TTI 302 1-8) | Physical time period 301 (TTI 302 9-16) | Physical time period (TTI 302 17-24) |
|---|---|---|---|
| A | 1 (time period) | 2 | 3 |
| B | 2 | 3 | 1 |
| C | 3 | 1 | 2 |

The RNC 100 allocates the time periods 1, 2, 3 between the Node Bs according to a re-use pattern as shown in Fig. 4. Each Node B 100 is allocated a "full power" time period or a "cell edge" period and 2 "cell centre" periods. The "full power" time period is allocated to cells according to a reuse pattern.

In a first period 1 "full power" is allocated to the first cells 401, in a second period 2 "full power" is allocated to the second cells 402 and in a third period 3 "full power" is allocated to the third cells 403.

During the "cell centre" periods, i.e. the periods of time period 300, 301 which are not "full power" periods, the cell edge UEs are restricted to low data rates. Thus, the cell edge area, is substantially free from high power transmission and thus the cell edge area forms a shell or a shelter for cell centre UEs during the "cell centre" periods. This shelter may changes with each time period 302.

The signalling for amending the cell edge/cell centre status of a UE comprises, using measurements of pilot Received Signal Strength Indication (RSSI) from the UEs by the RNC 100 to determine which UEs are cell edge UEs and which UEs are cell centre UEs. A UE may have a cell edge status if the type of the UE is identified as a cell edge type. A UE may have a cell centre status if the type of the UE is identified as a cell centre type.

The RNC 100 then may indicate a maximum power level during "cell centre" periods to cell edge UEs. The RNC 100 also indicates to the Node B 106 which periods are cell edge and which cell centre. The Node B scheduler needs the information for scheduling the resources and setting the cell centre and full power levels correctly. The Node B comprises the Node B scheduler.

During the scheduling operation, if the power ratio allocated to a cell edge UE during "full power" periods rises above the maximum value in "cell centre" periods, then the UE will use its full allocation during "full power" periods, but the RNC restricted allocation during "cell centre" periods. In other words, Node B and RNC allocate maximum power levels for an edge UE. The maximum power level allocated by the Node B can be greater than the maximum power level allocated by the RNC. In such a case, during the "full power" period an edge UE can use the maximum power level allocated by the Node B, whereas the edge UE during "cell centre" periods always has to use the power level allocated by the RNC. Thus, the RNC may influence the maximum power level allocated by the Node B. The power level allocated by the Node B is a so-called Node B grant.

In other words, during a "full power" period the maximum value for power for an edge UE is restricted by the maximum level set by the corresponding Node B and thus, the maximum level set by the RNC is disregarded by the edge UE.

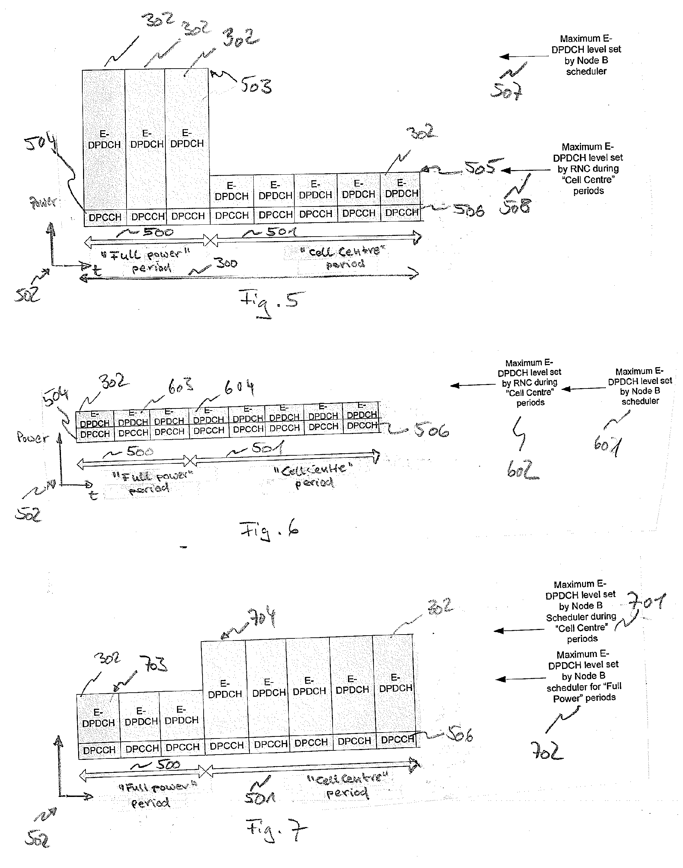

Fig. 5 shows UE E-DPDCH power level for a cell edge UE or edge UE during "cell centre" and "full power" periods when the Node B grant 507 is larger than the RNC cell edge limit 508.

In Fig. 5 the transmission time 300 is divided 8 time periods 302.

Three time periods 302 are configured as the "full power" period 500 and five time periods 302 are configured as "cell centre" period 501. Which time periods 302 or which HARQ processes are set to a certain power level and to which power level they are set may be indicated by a signalling between the RNC and the Node B. This information may be signalled using an "E-DCH Info" IE. Alternatively, a proprietary communication protocol may be implemented between the RNC and the Node B or the "E-DCH Info" IE may be extended to carry the required information.

The coordinate plane 502 comprises an abscissa which depicts the time and an ordinate, which depicts the maximum level for power.

Each time period 302 is shown as the maximal allowed power of a mobile physical channel during the corresponding time period. In particular the power of the Enhanced Dedicated Physical Data Channel (E-DPDCH) 503 and the power of the Dedicated Physical Control Channel (DPCCH) 504 during a "full power" period 500 are shown. Furthermore the power of E-DPDCH 505 and the power of jDPCCH 506 during a "cell centre" period 501 are shown.

During the "full power" period 500, the maximum power of each E-DPDCH 503 is set by Node B, in particular by a Node B scheduler, to a first power value 507 or a first Node B grant 507. During the "cell centre" period the maximum power level is set by RNC to a second value 508. During the "full power" period 500, the Node B has to obey the power limits set by the RNC.

The first value 507 is larger than the second power level 508.

The cell centre UEs may maintain 2 serving grants of Node B. One grant 702 for "full power" periods 500 and one grant 701 for "cell centre" periods 501. This would allow for cell centre UEs RX (receive) power to be reduced during periods at which cell edge UEs can transmit at higher power. The situation for the cell centre UE is shown in Fig. 7.

Fig. 6 shows UE E-DPDCH power level for a cell edge UE or edge UE during "cell centre" and "full power" periods when the Node B grant 601 is smaller than the RNC cell edge limit 602. As can be seen in Fig. 6, the maximum power of E-DPDCH 603 during "full power" periods is limited by the Node B grant limit 601. Furthermore, the maximum power level of E-DPDCH 604 during "cell centre" period 501 is limited by setting the Node B grant limit 601. Therefore, the maximum E-DPDCH power levels are substantially equal during the "full power" period 500 and during the "cell centre" period 501. During the "full power" period 500 and during the "cell centre" period 501 the maximum power level is set by the Node B scheduler.

Fig. 7 shows a UE E-DPDCH power level for a cell centre UE, i.e. UE which is located in the middle of a cell, during "cell edge" and "full power" periods. Two E-DPDCH limits 701, 702 are set by the Node B scheduler.

The maximum power level E-DPDCH during the "full power" period 500 is set to a first Node B grant 702 and during "cell centre" period the maximum power level of E-DPDCH is set to a second Node B grant 701. The second Node B grant 701 is grater than the first Node B grant 702.

Thus, the maximum power of E-DPDCH allowed for cell centre UE 703 during "full power" period 500 is lower than the maximum power of E-DPDCH 704 during the "cell centre" period 501.

A comparison of Fig. 5 with Fig. 7 shows that the maximum power level 503 of E-DPDCH during "full power" period 500 for an edge UE is larger than the maximum power level of E-DPDCH for the centre UE 703 during that period 500.

Furthermore, the maximum power level 505 of E-DPDCH during "cell centre" period 501 for an edge UE is lower than the maximum power level 704 of E-DPDCH for the centre UE during that period 501.

The RNC 100 also indicates to all UEs 105 and to all Node Bs 106 the mapping between virtual A, B, C and actual time periods 1, 2, 3.

The E-DPDCH power of cell edge users is restricted in some of the time periods 302, whereas any UE may be scheduled with a high E-DPDCH power in other time periods 302. Such scheduling could be achieved by activating/deactivating HARQ processes, or alternatively by the RNC 100 restricting the maximum data rate applicable to cell edge UEs in certain HARQ processes in certain time periods 302.

The usage of time periods 302 would be allocated between base stations 106 according to some sort of reuse pattern. The neighbour relationship of the cells 401, 402, 403 may be used to divide a time channel 300, 301 in time periods 1, 2, 3.

Additional Iub and Radio Resource Control (RRC) signalling from the RNC 100 restricting the maximum data rate for UEs 105 in certain virtual HARQ processes is provided. The signalling should indicate for which virtual HARQ processes the data rate or power offset is restricted and what the level of restriction is. The signalling could be contained within an "E-DCH Info" IE (Enhanced Dedicated Channel Info Information Element) and reconfigured as part of an E-DCH reconfiguration.

Additional Iub and RRC signalling from the RNC 100 is provided inhibiting transmission for certain virtual HARQ processes for cell edge UEs. The "E-DCH info" IE contains signalling for activating and deactivating HARQ processes

A mapping between virtual HARQ processes and real HARQ processes that allows for interference coordination based on sharing 8 HARQ processes in re-use patterns of 3 or 7 may be provided.

The additional signalling and the mapping may enable interference coordination for HSPA.

In the following an exemplary embodiment is described, how users may be classified as either cell edge or cell centre users. The absolute positioning of the UE in the cell is not required, merely where they are in relation to the, determined, cell centre/edge boundary.

Although likely to be related to the geographic boundary - in the absence of major RF (radio frequency) attenuating obstacles - the boundary of interest can be perceived as an "RF boundary", i.e. related to the amount of RF power a certain user has to transmit a signal with, in order for the base station to be able to decode that signal.

Using the RF power for determining the boundaries may be one example for differentiating between two terminal types, e.g. an edge terminal and a center terminal. However, other differentiation criteria may be possible to classify the terminals or UEs.

Based on such a classification, a control signal or a message may be transmitted to the UE, which message limits the data rate. The message may comprises a corresponding information.

Thus, it may be seen as an idea of the present invention separating a plurality of terminals in at least two classes. In addition to the position in cells, e.g. centre and edge, the terminals may be classified into classes of fast moving terminals and slow moving terminals, platinum subscribers or bronze subscribers, and good receiver terminals or bad receiver terminals etc. A good receiver may have a high receiver sensitivity and a bad receiver may have a low receiver sensitivity. I.e. a good receiver may have a higher receiver sensitivity than a bad receiver.

A subscriber may be a user using a terminal and thus, the terminal may be classified into the same class as the user. A platinum subscriber may be subscribed to a service providing higher quality of service than a service, a bronze subscriber is subscribed to.

A good receiver terminal may have a higher sensitivity or a lower power consumption than a bad receiver.

A method for determining the type of a terminal may be provided, which method may be based on the user monitoring a downlink pilot channel. An example for a pilot channel is the Common Pilot Channel (CPICH). The strength of the CPICH, in particular the strength of the CPICH of the cell or the CPICH of the Base Station, as seen by the user can be used to determine whether the user is an edge or a centre cell user of its current serving cell.

The method for determining the type of a terminal might be based on Soft handover procedures, as depicted by the two cell scenario shown in Fig. 8.

In Fig. 8 a Soft Handover relationship to Cell Edge/Centre Determination in a coordinate plane 800, 801 is shown. The coordinate plane comprises the abscissa 801 for the time and the ordinate 800 for the measurement quality.

On the abscissa 801 triggers 814 for periodic reports are shown as arrows. These triggers 814 are spaced apart in the distance of $T_p$. $T_p$ is the periodicity of the periodic triggered reports.

Furthermore, the first event trigger 802, the second event trigger 803 and the third event trigger 804 are shown.

For event triggered reports three thresholds 805, 806, 807 are depicted. The reference threshold line 805 is determined as the maximum value of CPICH1 808 and CPICH2 809. Based on this reference line a Soft Handover reporting range 810 is determined by subtracting a SHO (Soft Handover) fixed value 811 from the reference line 805 or the strongest CPICH reference line 805. The Soft Handover reporting range lies between the reference threshold line 805 and a reference line 806, i.e. the lower SHO Reporting Range reference line 806, calculated by subtracting the SHO offset value 811 from the reference line value 805

Furthermore, a Cell Edge reporting range 812 is determined, by subtracting the fixed cell edge reporting value 813 from the reference line 805. The Cell Edge reporting range 812 lies between a reference line 807, i.e. a lower Cell Edge Reporting Range reference line 807 and the lower SHO Reporting Range reference line 806. The lower Cell Edge Reporting Range reference line 807 is calculated by subtracting the cell edge reporting value 813 from the reference line value 805

CPICH1 808 is the Common Pilot Channel belonging to the user's serving cell at the beginning of the process.

The process may be characterized by three types of reporting Event Triggered Reporting, Periodic Triggered Reporting after an Event Trigger has occurred (Event Triggered Periodic Reporting), and Periodic Triggered Reporting (i.e. with no Event Trigger initialization, as indicated by the period $T_p$ 801).

The Serving Cell Centre may be the centre of a serving cell. The user is initially in the Serving Cell Centre since, in relative terms, the serving CPICH, CPICH1 808, can be seen to be very strong and no further (non-serving) CPICHs 808 have entered the Cell Edge reporting range.

The first report is triggered from an Event Trigger 802, where monitoring of CPICH2 809 by the user shows that CPICH2 809 has grown in strength, indicating, for example, that the user has moved closer to that cell's antenna and further away from the current serving antenna. Such a situation is also interpreted as the user getting closer to the serving cell edge. For example, CPICH2 809 enters the Cell Edge Reporting Range 812.

The next Event Triggered report 803 occurs when user monitoring of CPICH2 809 shows that it has entered the Soft Handover reporting range 810. By definition, when entering possible Soft handover 810 the user is a cell edge user.

The final Event Triggered report 804, shown in Fig. 8, occurs when user monitoring indicates that its current serving cell (characterized by CPICH1) is no longer generating the strongest pilot signal that the user can see, since CPICH2 is now greater than CPICH1. This event could trigger RRC signalling for change of serving cell.

Periodic Triggers 801 can be used to confirm the event triggers 802, 803, 804 and to pick up any anomalous behaviour.

The standard "lists" (sets) maintained by the user or by the UE when referring to Soft Handover are Active Set, Monitored Set, Detected Set. A set is a group of cells that a UE interacts with. It actually transmits to and receives from cells in the active set. The other sets contain cells that the UE makes measurements on. Defining sets is a way of setting bounds on the amount of work that the UE needs to do. Without defining sets the UE would need to attempt to monitor all possible cells. In other words, by defining sets of cells the processing power for determining the type of the UE may be reduced since the UE only has to concentrate on signal strengths from a selection of cells. The sets of cells may be determined by the CPICH associated with the corresponding cell exceeding or under-running a predefined threshold.

Active Set refers to the set of CPICHs that are currently being used for Soft Handover.

Monitored Set refers to the set of CPICHs that are not being used for Soft Handover but which have passed the Soft Handover range and Detected Set refers to the set of CPICHs which the user can detect, but which are not in either the Active or Monitored Set.

A "cell edge" Set can be added to the above and is defined as the set of CPICHs which fall in the Cell Edge Reporting range 812. The Cell Edge Reporting range may itself be defined as a certain number of dB's (Decibels) below the SHO threshold 806.

The Cell Edge Set will thus contain all of the CPICHs in the Active Set, excluding the Serving Cell CPICH, all of the CPICHs in the Monitored Set and some of the CPICHs in the Detected Set. Defining a cell edge set is a way of limiting which cells a UE has to consider in order for the RNC to decide if the UE is near a cell edge or not. "Contain" means that the UE considers those cells in the cell edge set as possibilities for triggering a repot relating to a change of cell edge/cell centre status. When a UE approximates to a cell the cell will firstly go to the detected set, then to the monitored set, then to the active set.

A user is classed as a Cell Edge User when any CPICH in the Cell Edge Set is less than a certain number of dB's distant from the Serving Cell CPICH. Otherwise the user is classed as a Cell Centre User.

Since the proposed method for determining the type of a terminal, in particular since the method for determining the user edge/centre classification uses a Soft handover concept it may use standardized signalling messages and standardized procedures.

A method of adding a monitored cell to the Active set may comprise adding the monitored cell to the Active set when the measured quantity of the Monitored Set, e.g. Ec/No, is greater than a certain value ThresholdSHO 806 for a fixed period of time (time-to-trigger). ThresholdSHO 806 is determined in relation to the strongest CPICH 805 and simply amounts to adding a "hysteresis" Offset as indicated in Equation (1). The ThresholdSHO value or the $\text{Threshold}_{SHO}$ value may be a negative value. The value ThresholdSHO may be used for determining the lower SHO Reporting Range reference line 806.

$$\text{Threshold}_{SHO} = \text{strongest\_CPICH} + \text{Offset}_{SHO} \qquad (1)$$

For the method for controlling a network node, in particular for the method of determining the type of a terminal, a further threshold is added, ThresholdEDGE 807 which is also determined in relation to the strongest CPICH 805 and adds a further hysteresis Offset as indicated in (2). The ThresholdEDGE or $\text{Threshold}_{EDGE}$ value may be a negative value.

The value ThresholdEDGE may be used for determining the lower Edge Reporting Range reference line 807.

$$\text{Threshold}_{EDGE} = \text{strongest\_CPICH} + \text{Offset}_{EDGE} \quad (2)$$

The method of determining the type of a terminal may comprise a method for measuring. The measurement part of the method is implemented in the user terminal 105.

Fig. 9 shows an EDGE Monitoring signalling diagram for the measuring part of the method for determining the type of a terminal. The method in step S1 is triggered by a Measurement Control EDGE message Measurement Control (EDGE) sent via the Serving Radio Network Controller (SRNC) 900 as part of the Radio Resource Control (RRC).

This Measurement Control EDGE message is sent via the Iub interface and will indicate to the user 903 the boundaries or thresholds and conditions for scanning for edge CPICHs. The Measurement Control EDGE message passes the Node B 901 and the Ue L1, i.e. the layer 1 of the user equipment.

For example a MEASUREMENT CONTROL message as described in 3GPP 25.331 may be used to transport the information to control the power for a communication between the UE and the Node B 901. Thus, the EDGE measurement reporting may be incorporated in the MEASUREMENT CONTROL message by adapting the MEASUREMENT CONTROL message such that an EDGE measurement identity could be signalled with a new type of set, e.g. the cell edge set. The cell edge set could be signalled by selecting a subset of the monitored set using the "Cells for measurement" IE (information element) according to 3GPP 25.331. The edge set may comprise neighbour cells that a UE could be close to and causing interference into. Thus, the edge set may comprise cells in a predefined area around a predefined UE.

In order to ensure up-to-date user edge/centre classification, the SRNC/RRC 900 will periodically update its information and will also update its information when Event Triggers have been dealt with by the user terminal 105. In other words, the SRNC/RRC 900 may maintain an association of UEs to corresponding cells and a corresponding classification of the UE within the corresponding cell, i.e. the classification as edge UE or centre UE.

When an event 802, 803, 804 within the boundaries 807, 806, 805 and conditions set by the SRNC/RRC 900 occurs, User Equipment (Ue) RRC layer 903 will send in step S2 a Measurement Request to the user terminal Layer 1 902 which will measure the required Measurement Quantity (e.g. Received Signal Code Power (RSCP), signal to noise ratio Ec/No etc.) and in step S3 report the measurement back to the Ue RRC layer 903.

The Ue RRC layer 903 in step S4 reports the measurement back to the RRC layer 900 in the SRNC. This may allow for centrally collecting information about UEs in the RNC.

Transfer of such messages from the user to the RNC could be done using an appropriate data channel, e.g. the Dedicated Physical Data Channel (DPDCH), embedding the message in a Packet Data Unit (PDU) whose associated header will indicate that this message is for RRC control and thus differentiate the message from a message for the user, a message for information, and a message comprising data.

The interfaces mentioned above can be seen in Fig. 10, which shows part of a combined GSM 1000 (Global System for Mobile Communications) network and UMTS 1001 network.

The GSM network 1000 comprise the BSC 1002, which BSC 1002 is connected to the BTS 1003. The BSC 1002 is also connected via an A interface to the CS-MGW 1005. Furthermore, the BSC 1002 is connected via a Gb interface 1006 to the SGSN 1007. Thus, via the Gb interface 1006 the GSM network 1000 is connected to the UMTS network 1001.

As depicted in Fig. 10, the RNC 100 centrally connects the Node Bs 106 via the Iub interface 109. The Node Bs 106 thus are connected to the RNC as a star connection. The star connection may allow the RNC coordinating the Node Bs 106 via the Iub interface.

The RNC 100 may be connected to a further RNC 100 via the Iur interface 1008. The Iur interface 1008 allows for a coordination of the RNCs 100 and may allow a combined cluster of RNCs to coordinate the Node Bs 100. Thus, a plurality of Node Bs 100 may be coordinated and consequently a larger area cells may be coordinated. The protocol run on the Iub and/or the Iur interface may be adapted to carry coordinating information for RNC 100 and for Node B 106.

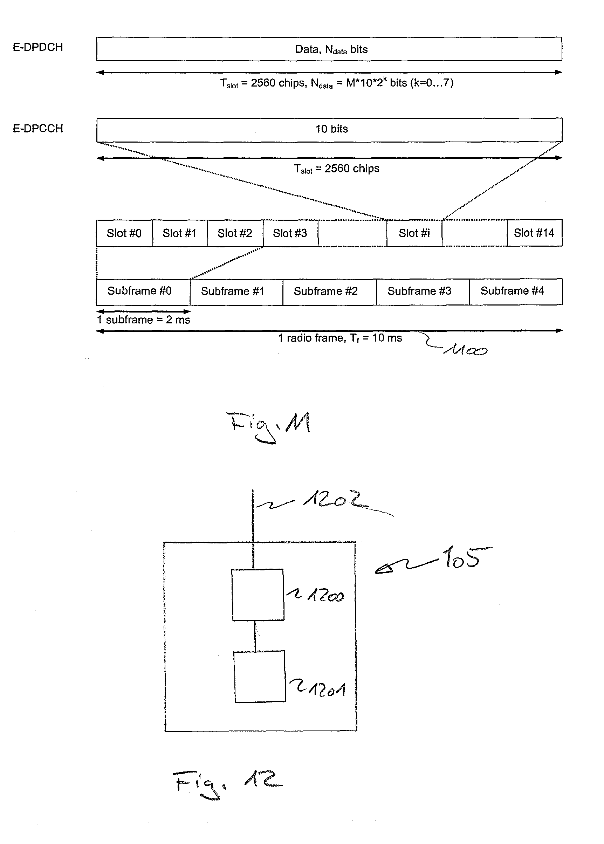

An Iu interface is used to connect the UMTS access network to a backbone. The Iu interface comprise the IuPS interface 1010 and the IuCS interface 1011. The IuPS interface 1010 connects the RNC 100 to the SGSN 1007 for data traffic and the IuCS interface 1011 connects the RNC 100 to the CS-MGW for voice traffic.Fig. 11 shows a frame structure of a time channel in particular of a TTI 1100 or a radio frame 1100 of a time channel. The time channel comprises a plurality of TTI 1100. In Fig. 11 a TTI 1100 is depicted having a duration of $T_f$ = 10 ms.

Each TTI or radio frame 1100 comprises 5 STTI or 5 subrames Subframe#0, Subframe#1, Subframe#2, Subframe#3, Subframe#4. Each subframe Subframe#0, Subframe#1, Subframe#2, Subframe#3, Subframe#4 or STTI has a duration of 2 ms and comprises three slots Slot#0, Slot#1, Slot#2, Slot#i. Thus, each radio frame 1100 comprises 15 slots.

Each slot Slot#0, Slot#1, Slot#2, Slot#i has a duration of Tslot = 2560 chips corresponding to Tslot = 10 ms / 15 slots, which is about 0.667 ms/slots or 2560 chips at a chiprate of 3.84 Mchips/s as of UMTS. In each slot, at least the DPCCH and possibly also E-DPCCH, E-DPDCH, HS-DPCCH or DPDCH may be transmitted in parallel using code multiplexing. For the DPCCH, each slot comprises 10 bits.

Fig. 12 shows a terminal 105 according to an exemplary embodiment of the present invention. The terminal 105 comprises the terminal receiving device 1200, the terminal receiving device 1200 comprising the antenna 1202. The terminal receiving device 1200 is adapted to receive a control signal comprising information for controlling a transmit power used for a communication between the terminal 105 and a base station 106 (not shown in Fig. 12) during a predefined time period 302 in accordance with a terminal type of the terminal 105.

Furthermore, the terminal 105 comprises a power controlling device 1201 connected to the terminal receiving device 1200.

The power controlling device 1201 is adapted to control the transmit power used for the communication between the terminal 105 and the base station 106 in accordance with the received information.

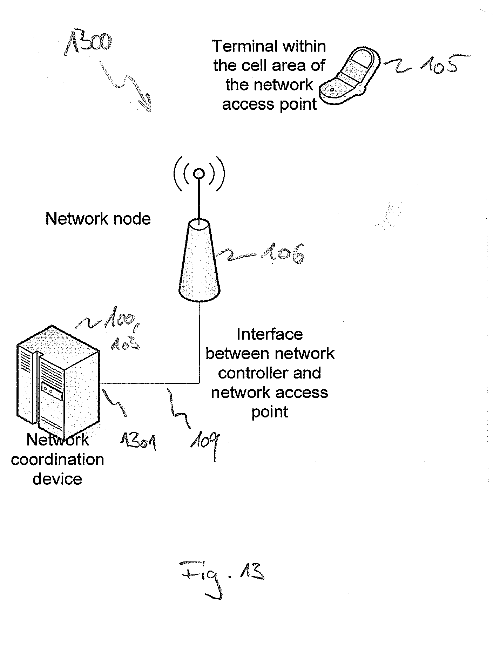

Fig. 13 shows a block diagram 1300 of a mobile network system. The block diagram shows an example configuration comprising a coordinating apparatus 100 comprising the network coordination device 103 or comprising the coordinating device 103, the network coordinating apparatus 100 connected via an interface 1301, e.g. an Iub Interface, to a network node 106 or to a base station 106. Via the network node 106 the coordinating device 100, 103 is connected to a terminal 105 that is located within the cell area of the network node 106.

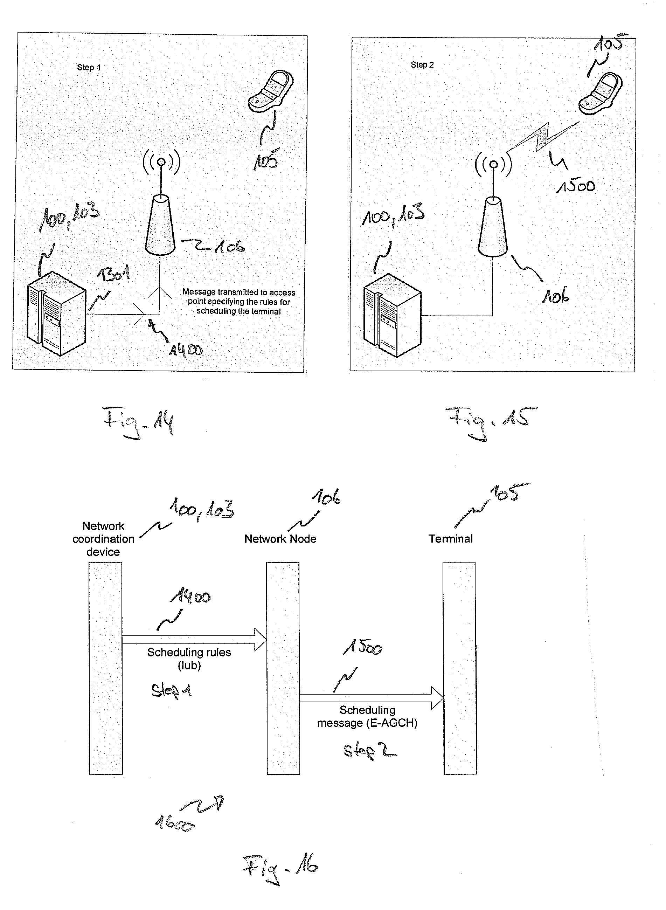

Fig. 14 is an example of message transfer when the network coordinating apparatus 100 sends information 1400 or rules 1400 to the network node 106 only. Fig. 14 shows a step 1 of an interference coordination signalling. The rules 1400 are transmitted along the interface 1301 from the network coordinating apparatus 100 to the network node 106.

In step 2, as depicted in Fig. 15, the network node 106 sends a scheduling command 1500 to the terminal 105 based on the rules, e.g. in the form of a scheduling message via an E-AGCH. In other words, the rules 1400 are processed by the base station 106.

The scheduling command 1500 informs the terminal 105 about a power offset value or about a ratio of E-DPDCH to DPCCH power. In particular, the scheduling command 1500 informs the terminal about a power offset value used for predefined time period 302 or STTIs 302.

Steps 1 and 2 of Figs. 14 and 15, respectively are summarized in the message sequence diagram 1600 of Fig. 16 where the network coordinating device 103 within the coordinating apparatus 100 sends the rules to the network node.

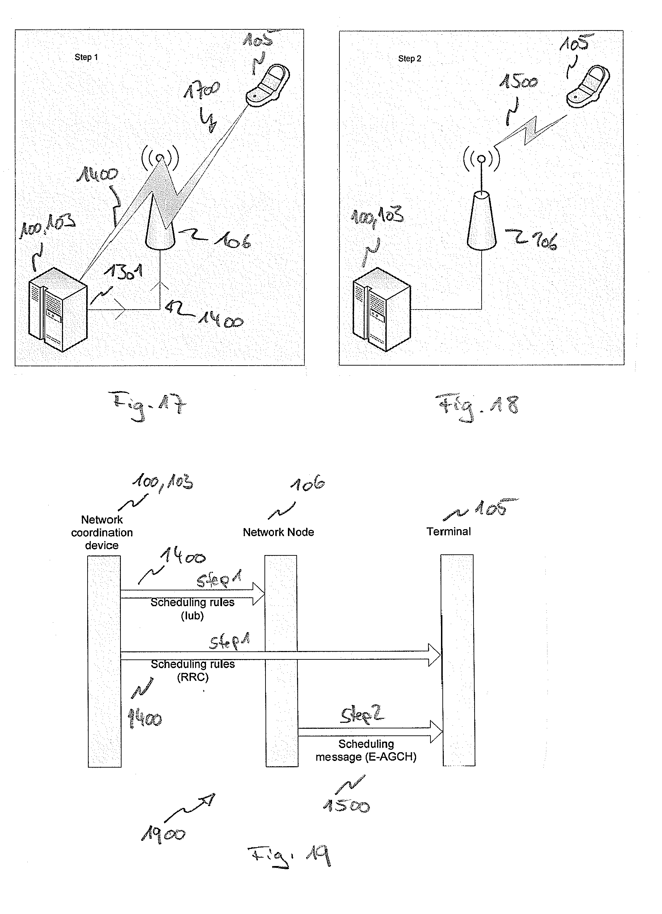

Fig. 17 shows an example for a message transfer when the coordinating apparatus 100, in particular the network coordination device 103, sends the rules 1400 to both the network node 106 and the terminal 105. In step 1, the rules 1400 are sent along the Iub interface 1301 from the network coordination device 103 to the network node 106. The rules 1400 are in parallel transferred by RRC (Radio Resource Control) signalling, represented by the flash 1700 between the node 100, 103 and the terminal 105, to the terminal 105.

In step 2, as depicted in Fig. 18, the network node 106 may schedule the terminal 105 according to the rules 1400. For scheduling the terminal 105, the network node 106 sends a scheduling command 1500 to the terminal 105 based on the rules, e.g. in the form of a scheduling message via an E-AGCH.

The network node 106 or the base station 106 may schedule the terminal 105 at the terminals 105 highest data rate set by the RNC 100, 103 or something lower. However scheduling the terminal 105 is not strictly necessary, as the terminal 105 has its highest power ratio already set by the RNC 100, 103.

Fig. 19 shows the message sequence diagram 1900 where the network coordination device 100, 103 sends the rules 1400 both to the network node 106 and to the terminal 105. For sending the rules 1400 to the network node 106, the coordination device 103 uses the Iub protocol. For sending the rules 1400 to the terminal 105, the coordination device 103 uses the RRC protocol.

The network node 106 generates a scheduling message 1500 based on the rules according to the protocol used for an E-AGCH and sends this scheduling message 1500 to the terminal 105.

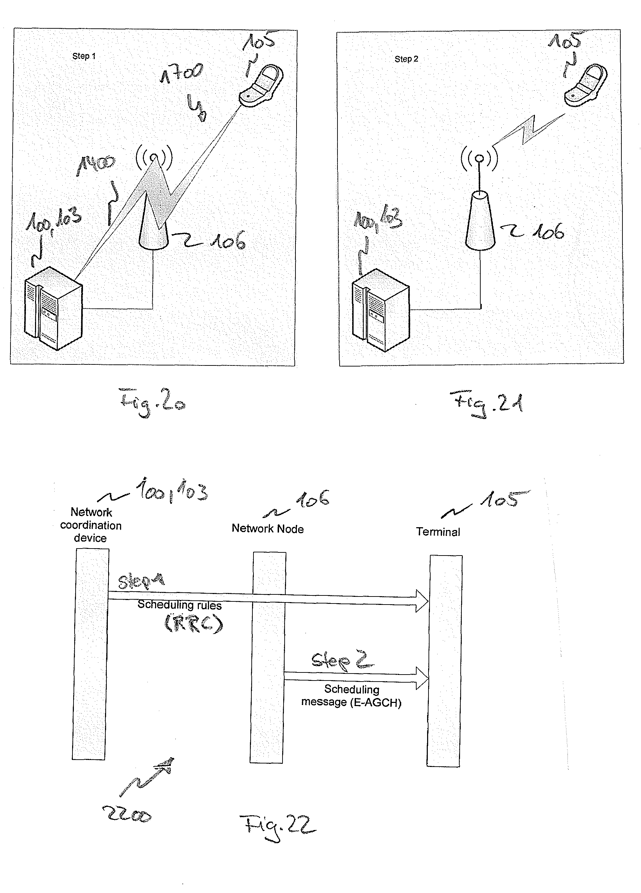

Fig. 20 shows a further example in which the rules 1400 are transmitted only to the terminal 105 and not to the network node 106. Thus, the terminal 105 generates the scheduling information from the rules.

In this scenario, the network coordination device 100, 103 sends the rules 1400 to the terminal 105 by RRC signalling, which is depicted by flash 1700 in Fig. 20. The network node 106 is not informed of the rules 1400, i.e. the rules transparently pass the network node 106.

In step 2, as depicted in Fig. 21, the network node 106 schedules the terminal 105. If the network node 106 schedules a higher resource allocation, e.g. a higher power ratio, to the terminal 105 than is permitted by the rules 1400 set by the network coordination device 100, 103, then the terminal 105 will apply higher priority to the rules set by the network coordination device 100, 103.

Steps 1 and 2 for the scenario when the network coordination device 100, 103 sends the rules 1400 only to the terminal 105 and not to the network node 106 are summarized in Fig. 22 in the message sequence diagram 2200. The rules 1400 are sent from the network coordination device 100, 103 to the terminal 105 using the RRC protocol.

For the different signalling between network coordination device 103, 100, network node 106 and/or terminal 105 different possibilities exist to transport the information, i.e. the rules 1400 or the scheduling message 1500.

As an example existing messages, extended messages, existing information elements or extended information elements can be used to transport the information, rules or signals for interference coordination between a terminal, a coordinating apparatus or a base station.

For signaling from a network node 106 or a NodeB 106 to a terminal 105 a message for an E-AGCH can be used.

For the signaling from a network coordination device 103, 100 or an RNC 100 to a NodeB 106 as a first alternative two information types may have to be signaled. The two information types are information on the limits of different types of users and information on the type of user.

This first alternative may concern to sending rules as the control signal.

For the information about the limits for the different types of user, which information may be a cell level information, a cell level message can be used or the information can be sent in link level message. Cell level information may be information which is common for a cell, i.e. for all terminals 105 in a cell.

The information about the type of a user may be required in the base station to determine the limitation to be used for a connection with a specific user, in combination with the information on the limits for the different type of users. Since the information on the type of a user may be on link level a different message can be used for the signaling than for signaling the cell level information. The information on the type of user may be used to control the transmit power for a user individually and not on a cell level.

Thus, the two information types can be provided in a single message or in separate messages.

For the signaling from a network coordination device 103, 100 or an RNC 100 to a NodeB 106 as a second alternative the scheduling information may have to be transmitted and not the rules. The RNC 100 then is already combining the information, i.e. generating the scheduling message from rules available in the RNC 100. This means that knowing the type of the terminal, the RNC 100 can determine the limits to be set for a certain link. Only the limits for the link are transmitted to the corresponding base station 106.

Messages, which may be used for signaling from an RNC 100 to a NodeB 106 interference coordination information are messages according to the NBAP protocol on Iub between RNC 100 and Node B 106. E.g. the "E-DCH TDD Info" or the "E-DCH FDD Info" as described in TS 25.433 can be used. This message may be sent from RNC 100 to NodeB 106 and could e.g. comprise the terminal type or the power limitation for the corresponding E-DCH link.

Furthermore, the Cell Setup Request message and/or the Cell Reconfiguration Request message as described in TS 25.433 can be used to signal interference coordination information from RNC 103 to NodeB 106. Since the Cell Setup Request message and/or the Cell Reconfiguration Request message is a message on a cell level this message can comprise the power limitations specific for a cell and type of terminal.

For signaling from Node B 106 to UE 105 or the terminal 105 for example an E-AGCH message can be used. Included in this message the limitations for the different time periods for a E-DPDCH can be transmitted.

For signaling from RNC 100 to UE 105 the RRC protocol, in particular messages defined in the RRC protocol, may be used.

As a first alternative if the limitation is provided for each E-DCH based on the terminal type the message "E-DCH reconfiguration information" and/or the message "E-DCH Info" as defined in TS 25.331 can be used. The reconfiguration message can be used when the type of terminal changes.

As a second alternative the RNC 100 send the rules for a cell in one message and the type of terminal is signaled to the terminal on dedicated information. Cell messages can be SIB (System Information Broadcast). Dedicated information can be sent according to the first alternative, e.g. as E-DCH info, "E-DCH reconfiguration information".

As the type of terminal can change during the link, the rules to be applied have to change as well during the connection. Therefore, reconfiguration messages have to support the possibilities to update above mentioned rules.

Generally receiving rules may mean that the rules may have to be processed and corresponding scheduling information may have to be generated by the device receiving the rules.

Receiving scheduling information may mean receiving instructions or commands which have to be executed as they are. No generation may be required.

In the above described messages the rules for a specific terminal 105 can be transmitted to specify the rules for a specific terminal 105 in comparison to the rules for the different types. Furthermore, the rules for a interference coordination can be indicated.

The interpretation of some fields of the used messages may have to be amended, in order to use existing messages for transporting signaling information for interference coordination.

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.


**Acronyms and Terminology**

| | |
|---|---|
| DPCCH | Dedicated Physical Control Channel |
| E-DPDCH | Enhanced Dedicated Physical Data Channel |
| HS-DPCCH | High Speed Dedicated Physical Control Channel |
| DPDCH | Dedicated Physical Data Channel |
| E-DCH | enhanced dedicated channel |
| E-AGCH | Enhanced Uplink Absolute Grant Channel or E-DCH Absolute Grant Channel |

|         |                                   |
|---------|-----------------------------------|
| HARQ    | Hybrid Automatic Repeat Request   |
| HSPA    | High Speed Packet Access          |
| HSUPA   | High Speed Uplink Packet Access   |
| IPR     | Intellectual Property Right       |
| LTE     | (UTRAN) Long Term Evolution       |
| OVSF    | Orthogonal Variable Spreading Factor |
| RNC     | Radio Network Controller          |
| RRC     | Radio Resource Control            |
| TTI     | Transmission Time Interval        |
| UE      | User Equipment                    |
| UTRA    | UMTS Terrestrial Radio Interface  |
| SGSN    | Serving GPRS Support Node         |
| RNC     | Radio Network Controller          |
| CS-MGW  | Circuit Switched Media Gateway    |
| BSC     | Base Station Controller           |
| BTS     | Base Transceiver Station          |
| Node B  | Base Station Controller (for UMTS) |

**Claims**

1. A coordinating apparatus (100) for controlling a base station (106) or a terminal (105), the coordinating apparatus comprising:

   a terminal type determining device (101);
   a coordinating device (103);
   wherein the terminal type determining device (101) is adapted to determine the type of a terminal (105);
   wherein the coordinating device (103) is adapted to transmit a control signal to at least one of the base station (106) and the terminal (105);
   wherein the control signal comprises information allowing to control a transmit power used for a communication between the terminal (105) and the base station (106) during a predefined time period (302) in accordance with the determined terminal type.

2. The coordinating apparatus of claim 1, wherein the transmit power is controlled by at least one control mechanism selected from the group of control mechanisms consisting of controlling a data rate of the communication between the terminal and the base station and controlling a power ratio of a communication channel between the terminal and the base station during a predefined time period.

3. The coordinating apparatus (100) of claim 2 wherein the power ratio is the power ratio of an E-DPDCH power and a DPCCH power.

4. The coordinating apparatus (100) of one of claims 1 to 3, wherein the time period (302) is at least one time period (302) selected from the group consisting of a radio frame (302), a subframe (Subframe#0, Subframe#1), an instance HARQ process, a TTI (1100), an STTI (302) and a slot (Slot#0, Slot#1).

5. The coordinating apparatus (100) of one of claims 1 to 4, wherein the coordinating apparatus (100) is at least one of a Radio Network Controller and a base station.

6. The coordinating apparatus (100) of one of claim1 1 to 5, wherein the coordinating device (103) is further adapted for mapping a virtual time period (A, B, C) to a predefined time period (1, 2, 3, 302).

7. The coordinating apparatus (100) of one of claims 1 to 6, wherein the type of the terminal (105) is at least one type selected from a centre type and an edge type.

8. The coordinating apparatus (100) of one of claims 1 to 7, wherein the type of the terminal (105) is determined by a neighbour cell measurement result conducted by the terminal (105).

9. The coordinating apparatus (100) of one of claims 1 to 8, wherein the terminal type determining device (101) is further adapted to determine the type of the terminal (105) by using a soft handover method.

10. The coordinating apparatus of one of claims 1 to 9, wherein when the base station or the terminal is located in a cell; and

wherein when a further base station or a further terminal is located in a further cell;
the terminal type determining device is further adapted to determine the further type of the further terminal;
wherein the coordinating apparatus is further adapted to transmit a further control signal to at least one of the further base station and the further terminal;
wherein the further control signal comprises further information allowing to control a further transmit power used for a further communication between the further terminal and the further base station during a further predefined time period in accordance with the further determined terminal type;
wherein the information depends on the first cell; and
wherein the further information depends on the further cell;
wherein the information differs from the further information.

11. The coordinating apparatus (100) of claim 10, wherein the coordinating device (103) is adapted to control the transmit power of the terminal and the further transmit power of the further terminal such that during a predefined time period the terminal transmits with a higher transmit power than the further terminal;

wherein the terminal is determined as an edge type terminal; and
wherein the further terminal is determined as a further edge type terminal.

12. A base station (106) providing cells, comprising:

a receiving device (200);
a cell coordinating device (201);
wherein the receiving device (200) is adapted to receive a control signal comprising information for controlling a transmit power used for a communication between a terminal (105) and the base station (106) during a predefined time period (302) in accordance with a terminal type of the terminal (105); wherein the cell coordinating device (201) is adapted to control the transmit power used for a communication between the terminal (105) and the base station (106) in accordance with the received information.

13. The base station (106) of claim 12, wherein the cell coordinating device is adapted to control the transmit power used for the communication by at least one control mechanism selected from the group of control mechanisms consisting of controlling a data rate of the communication between the terminal and the base station and controlling a power ratio of a communication channel between the terminal and the base station during a predefined time period.

14. The base station (106) of claim 12 or 13, wherein the power ratio is the power ratio of an E-DPDCH and a DPCCH.

15. The base station (106) of one of claims 12 to 14, wherein the time period (302) is at least one time period (302) selected from the group consisting of a radio frame (302), a subframe (Subframe#0, Subframe#1), an instance HARQ process, a TTI (1100), an STTI (302) and a slot (Slot#0, Slot#1).

16. The base station (106) of one of claims 12 to 15, wherein the type of the terminal (105) is at least one type selected from a centre type and an edge type.

17. A terminal (105) comprising:

a terminal receiving device (1200);
a power controlling device (1201);
wherein the terminal receiving device (1200) is adapted to receive a control signal comprising information for controlling a transmit power used for a communication between the terminal (105) and a base station (106) during a predefined time period (302) in accordance with a terminal type of the terminal (105);
wherein the power controlling device (1201) is adapted to control the transmit power used for the communication between the terminal (105) and the base station (106) in accordance with the received information.

18. The terminal (105) of claim 17, wherein the power controlling device (1200) is adapted to control the transmit power used for the communication by at least one control mechanism selected from the group of control mechanisms consisting of controlling a data rate of the communication between the terminal and the base station and controlling a power ratio of a communication channel between the terminal and the base station during a predefined time period.

19. The terminal (105) of claim 17 or 18, wherein the power ratio is the power ratio of an E-DPDCH and a DPCCH.

20. The terminal (105) of one of claims 17 to 19, wherein the type of the terminal (105) is at least one type selected from a centre type and an edge type.

21. The terminal (105) of one of claims 17 to 20, wherein the terminal receiving device (1200) is adapted to determine a quality characteristic of the communication by receiving a pilot signal.

22. The terminal (105) of one of claims 17 to 21, wherein the terminal is at least one terminal selected from the group of terminals consisting of a mobile phone, a personal digital assistant, a mobile data communication card, a navigation device and a laptop.

23. A method for controlling a base station (106) or a terminal (105), comprising:

   determining the type of the terminal (105);
   transmitting a control signal to at least one of the base station (106) and the terminal (105);
   wherein the control signal comprises information allowing to control a transmit power used for a communication between the terminal (105) and the base station (106) during a predefined time period (302) in accordance with the determined terminal type.

24. A program element for controlling a base station, which program element, when being executed by a processor, is adapted to carry out the method of claim 23.

25. A method for operating a base station (106) or a terminal (105), the method comprising:

   receiving a control signal comprising information for controlling a transmit power used for a communication between the terminal (105) and the base station (106) during a predefined time period (302) in accordance with a terminal type of the terminal (105);
   controlling the transmit power used for a communication between the terminal (105) and the base station (106) in accordance with the received information.

26. A program element for operating a base station (106) or a terminal (105), which program element, when being executed by a processor, is adapted to carry out the method of claim 25.

27. Use of a method for soft handover for determining a type of a terminal (105).

28. Use of a method for soft handover of claim 27, further comprising using a set of Common Pilot Channels, the set comprising:

   an active Common Pilot Channel set;
   a monitored Common Pilot Channel set; and
   at least one of a detected Common Pilot Channels set.

Fig. 1

Fig. 2

| 1 | 1 | 3 | 2 | 2 | 3 | 3 | 3 | 1 | 1 | 3 | 2 | 2 | 3 | 3 | 3 |
|---|---|---|---|---|---|---|---|---|---|---|---|---|---|---|---|
| A | A | C | B | B | C | C | C | C | C | 3 | A | A | B | B | 3 |

Fig. 3

Fig. 4

Fig. 10

Fig. 5

Fig. 6

Fig. 7

Fig. 8

Fig. 9

| E-DPDCH | Data, $N_{data}$ bits |
|---|---|

$T_{slot}$ = 2560 chips, $N_{data}$ = $M*10*2^k$ bits (k=0...7)

| E-DPCCH | 10 bits |
|---|---|

$T_{slot}$ = 2560 chips

| Slot #0 | Slot #1 | Slot #2 | Slot #3 | | Slot #i | | Slot #14 |
|---|---|---|---|---|---|---|---|

| Subframe #0 | Subframe #1 | Subframe #2 | Subframe #3 | Subframe #4 |
|---|---|---|---|---|

1 subframe = 2 ms

1 radio frame, $T_f$ = 10 ms        1100

Fig. 11

1202

105

1200

1201

Fig. 12

1300

Terminal within
the cell area of
the network
access point

105

((o))

Network node

106

100,
103

Interface
between network
controller and
network access
point

Network
coordination
device

1301      109

Fig. 13

EP 2 144 379 A1

Fig. 14

Fig. 15

Fig. 16

Step 1

1705

1700

1400

100,103

106

1301

1400

Fig. 17

Step 2

1705

1500

100,103

106

Fig. 18

100,103

106

1705

Network
coordination
device

Network Node

Terminal

1400

Step1

Scheduling rules
(Iub)

Step1

Scheduling rules
(RRC)

1400

Step2

Scheduling
message (E-AGCH)

1500

1900

Fig. 19

Step 1

105

1700

Ub

1400

100,103

106

Fig.20

Step 2

105

100,103

106

Fig.21

100,103

Network
coordination
device

106

Network Node

105

Terminal

Step 1
Scheduling rules
(RRC)

Step 2
Scheduling
message (E-AGCH)

2200

Fig.22

Europäisches Patentamt
European Patent Office
Office européen des brevets

**EUROPEAN SEARCH REPORT**

Application Number

EP 08 10 4661

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/066431 A (ERICSSON TELEFON AB L M [SE]; ERICSON MAARTEN [SE]; LARSSON KJELL [SE]) 5 June 2008 (2008-06-05)<br>* page 8, line 16 - page 9, line 2 *<br>* page 11, line 13 - page 12, line 6; claims 1,10,11,14,17; figure 5 *<br>----- | 1-7, 12-20, 22-26 | INV.<br>H04B7/005 |
| X | WO 2008/042967 A (QUALCOMM INC [US]; DAMNJANOVIC ALEKSANDAR [US]; MONTOJO JUAN [US]; MAL) 10 April 2008 (2008-04-10)<br><br>* paragraph [0032] - paragraph [0065]; figures 3-6,8-10 *<br>* paragraph [0072] - paragraph [0077]; claims 1,2,7,9,11,12,14,15 *<br>----- | 1-3, 12-14, 17-19, 21-26 | |
| X | US 2007/004465 A1 (PAPASAKELLARIOU ARIS [US] ET AL) 4 January 2007 (2007-01-04)<br>* paragraph [0063] - paragraph [0069]; claims 7,9 *<br>----- | 1,2,17, 18,22-26 | |
| X | EP 1 758 265 A (NTT DOCOMO INC [JP]) 28 February 2007 (2007-02-28)<br>* paragraph [0054] - paragraph [0086]; claim 1; figures 11-13,16-19 *<br>* paragraph [0119] - paragraph [0182] *<br>----- | 1-5,8,9, 27,28 | TECHNICAL FIELDS SEARCHED (IPC)<br><br>H04B |
| X | US 2003/039217 A1 (SEO MYEONG-SOOK [KR] ET AL) 27 February 2003 (2003-02-27)<br><br>* paragraph [0121] - paragraph [0129]; claims 1,16; figures 19-24 *<br>----- | 1,2,4,5, 17,18, 21-28 | |

-/--

The present search report has been drawn up for all claims

| Place of search | Date of completion of the search | Examiner |
|---|---|---|
| Munich | 10 December 2008 | Burghardt, Gisela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 08 10 4661

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/173275 A1 (DAS SUMAN [US] ET AL) 26 July 2007 (2007-07-26)<br><br>* paragraph [0010] - paragraph [0011]; claims 1,10-12 *<br>* paragraph [0022] - paragraph [0029]; figure 5 *<br>* paragraph [0037] *<br><br>----- | 1,4,5,7, 17,20, 22-26 | |
| | | | TECHNICAL FIELDS SEARCHED (IPC) |

The present search report has been drawn up for all claims

| Place of search | Date of completion of the search | Examiner |
|---|---|---|
| Munich | 10 December 2008 | Burghardt, Gisela |

EPO FORM 1503 03.82 (P04C01)

## ANNEX TO THE EUROPEAN SEARCH REPORT
## ON EUROPEAN PATENT APPLICATION NO.

EP 08 10 4661

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2008

| Patent document cited in search report | Publication date | Patent family member(s) | Publication date |
|---|---|---|---|
| WO 2008066431 A | 05-06-2008 | NONE | |
| WO 2008042967 A | 10-04-2008 | NONE | |
| US 2007004465 A1 | 04-01-2007 | NONE | |
| EP 1758265 A | 28-02-2007 | CN 1921337 A | 28-02-2007 |
| | | EP 1965507 A2 | 03-09-2008 |
| | | JP 2007060599 A | 08-03-2007 |
| | | KR 20070083228 A | 23-08-2007 |
| | | RU 2326510 C1 | 10-06-2008 |
| | | US 2007049320 A1 | 01-03-2007 |
| US 2003039217 A1 | 27-02-2003 | CN 1406033 A | 26-03-2003 |
| | | CN 1819482 A | 16-08-2006 |
| | | DE 10239068 A1 | 17-04-2003 |
| | | FR 2828968 A1 | 28-02-2003 |
| | | GB 2381166 A | 23-04-2003 |
| | | JP 3763805 B2 | 05-04-2006 |
| | | JP 2003134046 A | 09-05-2003 |
| | | KR 20030017954 A | 04-03-2003 |
| US 2007173275 A1 | 26-07-2007 | EP 1972076 A2 | 24-09-2008 |
| | | WO 2007087145 A2 | 02-08-2007 |

EPO FORM P0459

For more details about this annex : see Official Journal of the European Patent Office, No. 12/82

**EP 2 144 379 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Toskala ; Holma.** WCDMA for UMTS. Wiley, September 2007